# EUROPEAN PATENT SPECIFICATION

(11) **EP 3 209 973 B1**
(45) Date of publication and mention of the grant of the patent: **29.08.2018**
(21) Application number: 15804958.5
(22) Date of filing: 23.10.2015
(51) Int. Cl.: G01D 5/14

(54) **MAGNETORESISTIVE PROXIMITY SENSOR**
MAGNETORESISTIVER NÄHERUNGSSENSOR
CAPTEUR DE PROXIMITE MAGNETORESISTIF

(30) Priority: 23.10.2014 IT BO20140586
(43) Date of publication of application: 30.08.2017
(73) Proprietor: Schnell S.p.A., 61030 Montemaggiore al Metauro PU (IT)
(72) Inventor: MONTEMARANI, Massimo, I-61030 Montemaggiore al Metauro (PU) (IT); ROSSI, Gianluca, I-61030 Montemaggiore al Metauro (PU) (IT); CIBECA, Marco, I-61030 Montemaggiore al Metauro (PU) (IT); MARSILI, Roberto, I-61030 Montemaggiore al Metauro (PU) (IT); BECCHETTI, Matteo, I-61030 Montemaggiore al Metauro (PU) (IT); TOMASSINI, Roberto, I-61030 Montemaggiore al Metauro (PU) (IT)
(74) Representative: Manzella & Associati
(86) International application number: PCT/IB2015/058185
(87) International publication number: WO 2016/063256

(56) References cited:
- WO-A1-95/18982
- US-A- 5 596 272
- US-A1- 2005 280 411
- US-A1- 2013 320 970

## Description

### Technical field

The present invention regards a magnetoresistive proximity sensor, in particular adapted to detect the position of a ferromagnetic body in a plane.

### Prior art

The use of proximity sensors, for example of the optical, inductive or capacitive type for measuring the distance from the outer surface of determined bodies or products, is known.

Such sensors detect the distance of a body observed without requiring contact, though detecting - for example - a light beam, an induced current or a variation of the capacity of the involved sensitive element.

In some industries, such as for example those operating in the field of processing metal materials of various shapes, there arises the need to detect the presence and/or position of the products in the various steps of the manufacturing process.

Such need mainly arises from the industrial necessity of monitoring the production process, and thus the feedback correction of the parameters of the process in question as a function of the detections carried out, by means of sensors.

In the absence of efficient sensors, the correction activity on the production process is carried out by sight and by the intervention of the operator, preferably an expert in the production process to be monitored, thus requiring the interruption of the production process and the production of a series of test pieces, subsequently discarded as production by-products.

The proximity sensors of the known type currently do not allow to satisfactorily meet the requirements of some technical sectors.

For example, there may arise problems regarding the use of proximity sensors of the known type, in case of production processes taking place in the presence of dusts, cooling liquids and/or lubricants, which thus "dirty" the measurement environment, jeopardising the correct operation of the sensors and increasing measurement uncertainty to unacceptable levels.

In addition, some proximity sensors of the known type must be positioned so as to be able to "see" the body to be measured, thus unacceptably occupying the working space of the production process and thus being easily exposed to dirt, hence relatively unreliable.

It should be observed that such proximity sensors may directly detect the distance from the outer surface of an observed body while the position of the barycentre can be estimated only by means of complex calculation processes based on the geometry of the body, thus indirectly.

In addition, further proximity sensors comprising magnetoresistive sensors have been proposed.

For example, patent application US 2005/0280411 A1 comprises a first magnetoresistive sensor and a second magnetoresistive sensor connected in a bridge configuration. A magnetic source is positioned behind a proximity sensor, while a ferrous object passes in front of the proximity sensor, thus altering the direction of the field generated by the magnetic source.

Patent US 2,596,272 instead illustrates a magnetic sensor associated to a permanent magnet provided with a surface rounded at one end. The permanent magnet is associated to a sensitive component which comprises a first and a second magnetoresistive element, each in turn comprising a pair of magnetic resistors. The four magnetic resistors are connected to each other in electric switching, so as to form a Wheatstone bridge, to provide an output signal representing the magnetic field in the detection plane of the sensitive component.

In addition, the international patent application WO 95/18982 illustrates a sensor comprising a pair of magnetoresistive elements arranged in a shared plane and spaced from a lateral surface of a permanent magnet. A detection area is defined with respect to a preselected face of a pole of the permanent magnet. The magnetoresistive elements provide a first and a second signal which can be compared to define a third signal representing the presence or absence of a magnetically permeable object in the aforementioned detecting area.

Lastly, patent application US 2013/0320970 illustrates a particular configuration of a sensor comprising a circuit that generates a signal of a magnetic field, comprising at least a sensitive element for generating a magnetic signal indicating for example the features of a magnetic body passing in front of the sensitive element. Then, the sensor comprises a threshold detector, which reacts to the magnetic field signal, adapted to generate an output threshold signal, and a peak detector, which reacts to the magnetic field signal, to generate a respective output signal. The output signals have transitions associated to the magnetic field signal cycles. In addition, there is also included a circuit coupled to the threshold detector and peak detector, adapted to detect the aforementioned transitions, and use said detected transitions to detect an error if a sequence in which the transitions occur diverts from the expected sequence.

Also such proximity sensors, which use magnetoresistive sensitive elements do not allow fully meeting the needs of the various sectors of use, in particular for an efficient monitoring of the parameters involved in the production processes.

### Presentation of the invention

The task of the present invention is to overcome the aforementioned problems, by providing a magnetoresistive proximity sensor capable of allowing reliably detecting the position, at least two-dimensional, of a ferromagnetic body, in any operating or application condition.

Within this task, a further object of the present invention is to provide a magnetoresistive proximity sensor, capable of allowing easily detecting data useful for directly identifying the instantaneous position of the barycentre of a section of a body observed on a detection plane.

A further object of the present invention is to provide a magnetoresistive proximity sensor that is easy to obtain and functional, with safe and reliable use as well as relatively inexpensive.

A further object of the present invention is to provide a magnetoresistive proximity sensor that is flexible in use, in particular that is applicable to variously shaped materials, for use in apparatus for machining ferromagnetic materials.

The aforementioned objects are attained according to the present invention, by the magnetoresistive proximity sensor according to claim 1, as well as the method according to claim 12.

The magnetoresistive proximity sensor comprises a source body provided on a detection plane and adapted to generate a magnetic field. The sensor also comprises a first magnetoresistive sensitive element and at least one second magnetoresistive sensitive element, arranged in the aforementioned generated magnetic field, the first sensitive element being adapted to emit in output a first output signal and the second sensitive element being adapted to emit a second output signal. Such signals, the first and the second, indicate a local variation of the direction of the generated magnetic field, when the magnetic field is crossed by a body to be observed, having a ferromagnetic behaviour.

In addition, the sensor comprises acquisition means and, preferably, means for processing the first signal in output from the first sensitive element and the second signal in output from the second sensitive element, to obtain from the combination of the acquired first signal and second signal a measurement, at least in two dimensions, of the instantaneous position of the aforementioned body to be observed, crossing according to any direction in the aforementioned detection plane.

A characteristic of the sensor lies in the fact that due to the provision of at least one pair of sensitive elements, the aforementioned first sensitive element and the aforementioned second sensitive element, the sensor provides a "two-dimensional" measurement indicating the instantaneous position on the detection plane.

More precisely, the sensor according to the invention is capable of detecting the instantaneous position of the barycentre of the section of the body to be observed, intercepted on the aforementioned detection plane, in that it directly "senses", through the aforementioned variations of the generated magnetic field, not only the position of the surface thereof but also the mass of the body observed on the measurement plane and thus provides a direct indication of such quantity. Such capacity is quite advantageous with respect to the known detection systems, of the optical type, which do not allow performing a direct measurement of the instantaneous position of the barycentre of the section of an observed body, but require complex computing starting from the detection of the outer surface of the body, also considering the fact that the section of the observed body is not usually constant. Thus, the complex calculations required by the prior art sensors to obtain the aforementioned measurement slow the detection process.

Thus, it is important to emphasize that, as concerns the above, the process for detecting the instantaneous position of the barycentre of the section of an observed body is, according to the invention, quite rapid with respect to optical sensors of the prior art.

In addition, with respect to the prior art sensors, which use magnetoresistive sensitive elements, it should be observed that the sensor according to the invention allows performing a two-dimensional measurement. As a matter of fact, the first output signal and the second output signal, respectively emitted by the aforementioned first sensitive element and the second sensitive element, are processed to provide a first value in a first dimension and a second value in a second dimension, in the detection plane, whose combination unambiguously provides the instantaneous position in the detection plane of the section of the detected body, which crosses and affects the magnetic field generated by the aforementioned magnetic source.

Contrary to the prior art sensors, which provide a single output signal in any case, possibly processed by a plurality of input signals. Thus, the prior art devices allow obtaining an only one-dimensional measurement, or a measurement of the presence or absence of a ferromagnetic body crossing the detection field.

On the contrary, according to the invention the signals in output from each sensitive element are however used for separating a first coordinate and a second coordinate which, in combination, provide the exact instantaneous position of the section of the ferromagnetic body observed in the detection plane.

In addition, it should be observed that the first sensitive element and the second sensitive element are electrically disjointed so as to provide a first signal and a second signal, whose processing allows providing the two coordinates unambiguously indicating the position of the barycentre of the section of the observed ferromagnetic body in the detection plane. The distinction of a first coordinate and a second coordinate may occur, for example, through an experimental multidimensional calibrating method.

In addition, given that the sensor according to the invention is substantially capable of detecting the instantaneous position of the mean mass, thus of the barycentre, of the section of the observed body on the detection plane, instead of one or more points of the relative contour, the measurement carried out by the sensor is not affected by defects of the shape or surface of the observed body which are usually present.

It should be observed that the sensor according to the invention is not subject of the "dirtying" problems that affect prior art sensors. As a matter of fact, the sensor may also be installed beneath or behind a work surface of any apparatus, for detecting the passage of products being machined on the work surface. Basically, the sensor may detect the variations of the magnetic field determined by such passage even without "seeing", in the optical sense, the product to be detected.

The sensor according to the invention also allows, by processing the relative data, measuring further quantities, such as the displacement speed, acceleration, dimensions and number of bodies that cross or are present in the measurement field at the detection plane.

As a matter of fact, for example it is possible to obtain results regarding the speed of an observed body, measuring at least one first value of the instantaneous position of the observed body, more precisely a section of the body, and a second value of the instantaneous position, observed in a determined time range.

In addition, the dimensions of the observed body may be obtained as a function of the distortion of the magnetic field generated by the source body, caused by the observed body and detectable by the aforementioned sensitive elements in form of the respective signals. The degree of such distortion actually indicates the mass of the body observed on the measurement plane, and thus the dimensions of the body where the material and geometry are known.

According to an aspect of the invention, the first sensitive element and the second sensitive element of the sensor comprise respective resistive elements, for example obtained in form of films made of magnetoresistive material provided with anisotropic and/or giant magnetoresistance.

Preferably, each sensitive element comprises four resistive elements, associated to a Wheatstone bridge, for obtaining a respective voltage sensor in output, starting from the resistance variations of the aforementioned resistive elements upon the passage of said body observed on the detection plane.

According to a further aspect of the invention, at least one of the aforementioned resistive elements comprises a film made of permalloy.

The aforementioned film may be covered by a plurality of aluminium strips oriented at 45° with respect to the direction of a magnetic field determined by the magnetisation of the film, according to an arrangement called "barber pole", to optimise the magnetoresistive effect.

Preferably, the aforementioned sensitive elements or at least one from among the first sensitive element and the second sensitive element is of the multilayer type, comprising a superimposition of ferromagnetic layers alternated with non-ferromagnetic layers.

The source body is preferably a permanent magnet, for example a neodymium permanent magnet.

According to an aspect of the invention, the source body is cube-shaped, to improve the sensitiveness to the angular distortions of the magnetic field.

According to a preferred configuration, the first sensitive element and the second sensitive element are arranged equally spaced from the source body.

According to an optimal configuration, the sensor is symmetric with respect to an axis, with the axis of the generated magnetic body, parallel to such symmetric axis.

Such arrangement allows obtaining output signals with an acceptable dynamic and with monotone trend with respect to the displacement of the observed body.

Lastly, the sensor preferably comprises means for amplifying the signals in output from the sensitive elements, for improving the signal/noise ratio for the at least two output signals.

### Description of the drawings

The details of the invention shall be more apparent from the description of the detailed description of a preferred embodiment of the magnetoresistive proximity sensor according to the invention, illustrated by way of example in the attached drawings, wherein:
figure 1 shows a schematic plan view of the sensor according to the invention;
figures 2, 2a and 2b respectively show a scheme representing the operation of the sensor according to the invention, as well as charts representing the trend of the signals in output from each sensitive element of the sensor.

### Embodiments of the invention

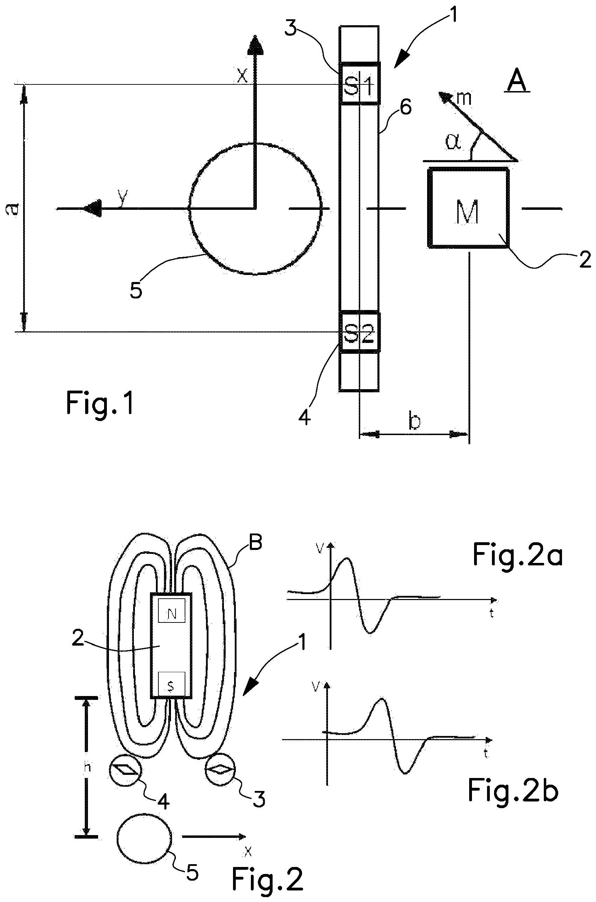

With particular reference to the figures, the magnetoresistive proximity sensor according to the invention is indicated with 1 (see figure 1).

The magnetoresistive proximity sensor 1 comprises a source body 2 provided on a detection plane A and adapted to generate a magnetic field B, a first magnetoresistive sensitive element 3 and at least one second magnetoresistive sensitive element 4, arranged at a determined distance a in the aforementioned generated magnetic field B.

More precisely, the first sensitive element 3 and the second sensitive element 4 are substantially transducer comprising at least one resistive portion, sensitive, in that it is subjected to a resistance variation due to the variation of the direction of the magnetic field B. Preferably, each sensitive element 3, 4 comprises four resistive portions associated to the four sides of a Wheatstone bridge, so as to emit a first signal and a second signal in output, in response to a local variation of the direction of the magnetic field B.

Such resistive portion is preferably constituted by a film made of permalloy, a material with magnetic properties for example obtainable through a photolithographic deposition.

In order to obtain a linear characteristic of the sensor 1, as regards a reduced measurement range, such permalloy film is preferably covered by a plurality of aluminium strips oriented at 45° with respect to the direction of a magnetic field determined by the magnetisation of the aforementioned film, according to an arrangement called "barber pole".

Or the first sensitive element 3 and the second sensitive element 4 are preferably of the multilayer type, comprising a superimposition of ferromagnetic layers alternated with non-ferromagnetic layers, so as to have the so-called "giant magnetoresistance".

Basically, the first sensitive element 3 and the second sensitive element 4 behave like electronic "compasses", thus indicating the local orientation variation of the magnetic field. Such variation for example occurs in the presence of a body with a ferromagnetic behaviour in the magnetic field B generated by the source body 2.

The magnetic field B, in particular, is modified by the appearance and displacement in the magnetic field B of a ferromagnetic body 5 to be observed (see figure 2).

In order to measure the instantaneous position and possibly the displacement of the crossing ferromagnetic body, the first sensitive element 3 and the second sensitive element 4 are suitably fixed on a non-ferromagnetic support 6, thus incapable of interfering with the magnetic field B generated by the source body 2.

The source body 2 is preferably a permanent magnet, preferably prism-shaped, in particular cube-shaped. Preferably, the magnet is a neodymium magnet.

According to an optimal configuration, the sensor 1 is symmetric with respect to an axis along which the source body 2 is arranged. The first sensitive element 3 and the second sensitive element 4 are positioned on opposite sides of the aforementioned symmetric axis, equally spaced therefrom.

The magnetic field B generated by the source body 2 is preferably oriented with the north-south axis thereof parallel to the aforementioned symmetry axis. In this case, the angle α between the axis of the field and the symmetric axis of the sensor 1 is zero (see figure 1). Such configuration allows obtaining monotone, repeatable and readable detections.

The sensor 1 also comprises means for acquiring the signals emitted by the sensitive elements 3, 4, for example of the oscilloscope type.

Preferably, the sensor 1, comprises means for processing the acquired signals, capable of processing the acquired signals to obtain measurements of the instantaneous position of the barycentre of the section of the ferromagnetic body 5 present in the magnetic field B.

Such processing may also provide the displacement speed of the aforementioned body 5, acquiring and suitably correlating the signals indicating the position of the ferromagnetic body in a determined time range.

The operation of the magnetoresistive proximity sensor according to the invention is clear from the description above.

When the ferromagnetic body 5 is not in front of the sensor 1, the sensitive elements 3, 4 detect the direction of the magnetic field B produced by the source body 2. On the contrary, when the ferromagnetic body 5 is arranged before the sensor 1, it acquires its own magnetisation and produces its own magnetic field in response to the magnetising one of the magnet or source body 2.

In the latter case, the sensitive elements 3, 4 detect the direction of the magnetic field resulting from the superimposition of the field B generated by the source body 2 and of the responding one of the ferromagnetic body 5.

In practice, the ferromagnetic body 5 to be detected produces a distortion of the magnetic field lines which impact the sensitive elements 3, 4, as a function of the relative position thereof with respect to the sensor 1 (see figure 2).

Each sensitive element 3, 4 transmits a voltage signal which is acquired by the acquisition means.

Lastly, the processing of the acquired signals, thus the combination thereof, allows obtaining the position and/or displacement speed of the barycentre of the section of the ferromagnetic body 5. More precisely, the processing means are configured to obtain a two-dimensional measurement from the at least two acquired signals. As a matter of fact, such means separate a first coordinate in a first dimension and a second coordinate in a second dimension, unambiguously defining the position of the section of the ferromagnetic body in the detection plane.

In the practical implementation of the invention, the used materials as well as the sizes may vary according to the needs.

## Claims

1. Magnetoresistive proximity sensor, comprising a source body (2) provided on a detection plane (A) and adapted to generate a magnetic field (B), a first magnetoresistive sensitive element (3) and at least one second magnetoresistive sensitive element (4), spaced in said generated magnetic field (B), said first sensitive element being adapted to emit a first output signal and said second sensitive element being adapted to emit a second output signal, said first signal and said second signal indicating a local variation of the direction of said generated magnetic field (B), when said magnetic field (B) is crossed by a ferromagnetic body (5) to be detected, **characterised in that** it comprises means for acquiring said first signal and said second signal, means for processing said first signal and said second signal acquired by said acquisition means, the means for processing configured to obtain a two-dimensional measurement of the instantaneous position of the barycentre of the section of the ferromagnetic body (5) in said detection plane (A), said obtained two-dimensional measurement being univocally defined by a first coordinate determined in a first dimension and by a second coordinate determined in a second dimension of said detection plane (A).

2. Sensor according to claim 1, **characterized in that** said first magnetoresistive sensitive element (3) and said second magnetoresistive element (4) are electrically disjointed so as to provide respectively said first signal and said second signal.

3. Sensor according to claim 1 or 2, **characterized in that** said processing means distinguish, by processing, said first coordinate and said second coordinate through experimental multidimensional calibrating method.

4. Sensor according to one of the preceding claims, **characterised in that** each said sensitive element (3, 4) comprises four resistive elements, associated to a Wheatstone bridge, configured to obtain a respective output voltage signal from each said sensitive element (3, 4), starting from the resistance variation of said resistive elements upon the passage of said body (5) observed on said detection plane (A).

5. Sensor according to claim 4, **characterised in that** at least one from among said first sensitive element (3) and said second sensitive element (4) comprises a film made of ferromagnetic material provided with anisotropic and/or giant magnetoresistance, associated to a Wheatstone bridge, for detecting a respective resistance variation upon the passage of said ferromagnetic body (5).

6. Sensor according to one of the preceding claims, **characterised in that** at least one from among said first sensitive element (3) and said second sensitive element (4) comprises a film made of permalloy.

7. Sensor according to claim 6, **characterised in that** said film is covered by a plurality of aluminium strips oriented at 45° with respect to the direction of a magnetic field determined by the magnetisation of said film, according to an arrangement called "barber pole".

8. Sensor according to one of the preceding claims, **characterised in that** at least one from among said first sensitive element (3) and said second sensitive element (4) is of the multilayer type, comprising a superimposition of ferromagnetic layers alternated with non-ferromagnetic layers.

9. Sensor according to one of the preceding claims, **characterised in that** said source body (2) is a permanent magnet.

10. Sensor according to claim 9, **characterised in that** said source body (2) is a permanent neodynium magnet.

11. Sensor according to claim 9, **characterised in that** said source body (2) is cube-shaped.

12. Sensor according to one of the preceding claims, **characterised in that** said first sensitive element (3) and said second sensitive element (4) are arranged symmetrically with respect to a symmetric axis, equally spaced with respect to said source body (2), said symmetric axis being parallel to the axis of said generated magnetic field.

13. Sensor according to one of the preceding claims, **characterized in that** said means for processing said first signal and said second signal acquired by said acquisition means are configured to process said first signal and said second signal, for measuring the displacement speed and/or the acceleration and/or the dimensions and number of said bodies that cross or are present in the measurement field at said detection plane (A).

14. Method for detecting the instantaneous position of the barycentre of the section of a ferromagnetic body (5) to be detected on a detection plane (A), comprising the steps of:
a. providing a magnetoresistive proximity sensor (1) comprising a source body (2) provided on said detection plane (A) and adapted to generate a magnetic field (B), a first magnetoresistive sensitive element (3) and at least one second magnetoresistive sensitive element (4), arranged at a determined distance (a) in said generated magnetic field (B), means for acquiring said first signal and said second signal and means for processing said fist signal and said second signal acquired by said acquisition means;
b. providing or supplying said ferromagnetic body (5) through said detection plane (A);
c. acquiring a first signal emitted in output by said first sensitive element (3) and a second signal emitted in output by said second sensitive element (4) by means of said acquisition means,
d. processing said acquired first signal and said second signal by means of said processing means, thus obtaining a two-dimensional measurement, defined by a first coordinate in a first dimension and by a second coordinate in a second dimension, indicating the instantaneous position of the barycentre of said ferromagnetic body (5) in said detection plane (A).

## Patentansprüche

1. Magnetoresistiver Näherungssensor, der einen Quellenkörper (2), der auf einer Detektionsebene (A) vorgesehen und ausgelegt ist, um ein Magnetfeld (B) zu erzeugen, ein erstes magnetoresistives empfindliches Element (3) und mindestens ein zweites magnetoresistives empfindliches Element (4), die im erzeugten Magnetfeld (B) beabstandet sind, umfasst, wobei das erste empfindliche Element ausgelegt ist, um ein erstes Ausgangssignal abzugeben, und wobei das zweite empfindliche Element ausgelegt ist, um ein zweites Ausgangssignal abzugeben, wobei das erste Signal und das zweite Signal eine lokale Richtungsänderung des erzeugten Magnetfeldes (B) angeben, wenn das Magnetfeld (B) von einem zu detektierenden ferromagnetischen Körper (5) durchgelaufen wird, **dadurch gekennzeichnet, dass** er Mittel zum Erfassen des ersten Signals und des zweiten Signals, Mittel zum Verarbeiten des ersten Signals und des zweiten Signals, welche durch die Erfassungsmittel erfasst werden, umfasst, wobei die Verarbeitungsmittel ausgelegt sind, um eine zweidimensionale Messung der Momentanposition des Schwerpunktes des Abschnitts des ferromagnetischen Körpers (5) in der Detektionsebene (A) zu erhalten, wobei die erhaltene zweidimensionale Messung durch eine erste Koordinate, die in einer ersten Dimension bestimmt ist, und durch eine zweite Koordinate, die in einer zweiten Dimension der Detektionsebene (A) bestimmt ist, eindeutig definiert wird.

2. Sensor nach Anspruch 1, **dadurch gekennzeichnet, dass** das erste magnetoresistive empfindliche Element (3) und das zweite magnetoresistive Element (4) elektrisch voneinander getrennt sind, um jeweils das erste Signal und das zweite Signal zu liefern.

3. Sensor nach Anspruch 1 oder 2, **dadurch gekennzeichnet, dass** die Verarbeitungsmittel durch Verarbeitung mittels eines experimentellen multidimensionalen Kalibrierungsverfahrens die erste Koordinate und die zweite Koordinate unterscheiden.

4. Sensor nach einem der vorhergehenden Ansprüche, **dadurch gekennzeichnet, dass** jedes empfindliche Element (3, 4) vier Widerstandselemente umfasst, welche einer Wheatstone-Brücke zugeordnet sind, die ausgelegt ist, um ausgehend von der Widerstandsänderung der Widerstandselemente beim Durchlaufen des auf der Detektionsebene (A) betrachteten Körpers (5) ein jeweiliges Ausgangsspannungssignal aus jedem der empfindlichen Elemente (3, 4) zu erhalten.

5. Sensor nach Anspruch 4, **dadurch gekennzeichnet, dass** mindestens eines aus dem ersten empfindlichen Element (3) und dem zweiten empfindlichen Element (4) eine Folie aus ferromagnetischer Werkstoff umfasst, der mit anisotropem magnetoresistivem oder GMR-Effekt versehen ist, der einer Wheatstone-Brücke zugeordnet ist, um eine jeweilige Widerstandsänderung beim Durchlaufen des ferromagnetischen Körpers (5) zu detektieren.

6. Sensor nach einem der vorhergehenden Ansprüche, **dadurch gekennzeichnet, dass** mindestens eines aus dem ersten empfindlichen Element (3) und dem zweiten empfindlichen Element (4) eine Folie aus Permalloy umfasst.

7. Sensor nach Anspruch 6, **dadurch gekennzeichnet, dass** die Folie durch eine Vielzahl von Aluminiumstreifen bedeckt wird, die zur Richtung eines durch die Magnetisierung der Folie bestimmten Magnetfeldes auf 45 Grad ausgerichtet sind, gemäß einer Anordnung, die "Barber-Pole-Anordnung" genannt wird.

8. Sensor nach einem der vorhergehenden Ansprüche, **dadurch gekennzeichnet, dass** mindestens eines aus dem ersten empfindlichen Element (3) und dem zweiten empfindlichen Element (4) von dem mehrlagigen Typ ist, umfassend eine Überlagerung der ferromagnetischen Schichten, abgewechselt mit nicht-ferromagnetischen Schichten.

9. Sensor nach einem der vorangehenden Ansprüche, **dadurch gekennzeichnet, dass** der Quellenkörper (2) ein Permanentmagnet ist.

10. Sensor nach Anspruch 9, **dadurch gekennzeichnet, dass** der Quellenkörper (2) ein Neodympermanentmagnet ist.

11. Sensor nach Anspruch 9, **dadurch gekennzeichnet, dass** der Quellenkörper (2) würfelförmig ist.

12. Sensor nach einem der vorhergehenden Ansprüche, **dadurch gekennzeichnet, dass** das erste empfindliche Element (3) und das zweite empfindliche Element (4) symmetrisch zu einer symmetrischen Achse und gleichmäßig beabstandet zum Quellenkörper (2) angeordnet sind, wobei die symmetrische Achse parallel zur Achse des erzeugten Magnetfeldes ist.

13. Sensor nach einem der vorhergehenden Ansprüche, **dadurch gekennzeichnet, dass** die Mittel zum Verarbeiten des ersten Signals und des zweiten Signals durch die Erfassungsmittel erfasst werden, welche Verarbeitungsmittel so ausgelegt sind, dass sie das erste Signal und das zweite Signal verarbeiten, um die Verstellungsgeschwindigkeit und/oder die Beschleunigung und/oder die Abmessungen und die Anzahl der durchlaufenden oder im Messungsfeld an der Detektionsebene (A) vorhandenen Körper zu messen.

14. Verfahren zum Detektieren der Momentanposition des Schwerpunktes des Abschnitts des zu detektierenden ferromagnetischen Körpers (5) auf einer Detektionsebene (A), umfassend die folgenden Schritte:
a. Bereitstellen eines magnetoresistiven Näherungssensors (1), der einen Quellenkörper (2), der auf der Detektionsebene (A) vorgesehen und ausgelegt ist, um ein Magnetfeld (B) zu erzeugen, ein erstes magnetoresistives empfindliches Element (3) und mindestens ein zweites magnetoresistives empfindliches Element (4), die im erzeugten Magnetfeld (B) in einem vorgegebenen Abstand (a) voneinander angeordnet sind, Mittel zum Erfassen des ersten Signals und des zweiten Signals und Mittel zum Verarbeiten des ersten Signals und des zweiten Signals umfasst;
b. Bereitstellen oder Zuführen des ferromagnetischen Körpers (5) über die Detektionsebene (A);
c. Erfassen eines ersten Signals, das durch das erste empfindliche Element (3) ausgegeben wird, und eines zweiten Signals, das durch das zweite empfindliche Element (4) über eines der Erfassungsmittel ausgegeben wird,
d. Verarbeiten des erfassten ersten Signals und des zweiten Signals über die Verarbeitungsmittel, wodurch eine zweidimensionale Messung erhalten wird, die durch eine erste Koordinate in einer ersten Dimension und durch eine zweite Koordinate in einer zweiten Dimension erhalten wird, welche die Momentanposition des Schwerpunktes des ferromagnetischen Körpers (5) in der Detektionsebene (A) angibt.

## Revendications

1. Capteur de proximité magnétorésistif, comprenant un corps source (2) prévu sur un plan de détection (A) et adapté pour générer un champ magnétique (B), un premier élément sensitif magnétorésistif (3) et au moins un second élément sensitif magnétorésistif (4), espacés dans ledit champ magnétique (B) généré, ledit premier élément sensitif étant adapté pour émettre un premier signal de sortie et ledit second élément sensitif étant adapté pour émettre un second signal de sortie, ledit premier signal et ledit second signal indiquant une variation locale de la direction dudit champ magnétique (B) généré, lorsque ledit champ magnétique (B) est traversé par un corps ferromagnétique (5) à détecter, **caractérisé en ce qu'**il comprend des moyens pour acquérir ledit premier signal et ledit second signal, des moyens pour traiter ledit premier signal et ledit second signal acquis par lesdits moyens d'acquisition, les moyens de traitement configurés pour obtenir une mesure bidimensionnelle de la position instantanée du barycentre de la section du corps ferromagnétique (5) dans ledit plan de détection (A), ladite mesure bidimensionnelle obtenue étant définie de manière univoque par une première coordonnée déterminée dans une première dimension et par une seconde coordonnée déterminée dans une seconde dimension dudit plan de détection (A).

2. Capteur selon la revendication 1, **caractérisé en ce que** ledit premier élément sensitif magnétorésistif (3) et ledit second élément magnétorésistif (4) sont électriquement disjoints de manière à fournir respectivement ledit premier signal et ledit second signal.

3. Capteur selon la revendication 1 ou 2, **caractérisé en ce que** lesdits moyens de traitement distinguent, à travers le traitement, ladite première coordonnée et ladite seconde coordonnée par le biais d'un procédé de calibrage multidimensionnel expérimental.

4. Capteur selon l'une quelconque des revendications précédentes, **caractérisé en ce que** chaque élément sensitif (3, 4) comprend quatre éléments résistifs, associés à un pont de Wheatstone, étant configurés pour obtenir un signal de tension de sortie respectif de chaque élément sensitif (3, 4), à partir de la variation de résistance desdits éléments résistifs lors du passage dudit corps (5) observé sur ledit plan de détection (A).

5. Capteur selon la revendication 4, **caractérisé en ce qu'**au moins un entre ledit premier élément sensitif (3) et ledit second élément sensitif (4) comprend un film constitué de matériau ferromagnétique pourvu de magnétorésistance anisotrope et/ou géante, associé au pont de Wheatstone, pour détecter une variation de résistance respective lors du passage dudit corps ferromagnétique (5).

6. Capteur selon l'une quelconque des revendications précédentes, **caractérisé en ce qu'**au moins un entre ledit premier élément sensitif (3) et ledit second élément sensitif (4) comprend un film constitué de permalloy.

7. Capteur selon la revendication 6, **caractérisé en ce que** ledit film est recouvert par une pluralité de bandes en aluminium orientées à 45° par rapport à la direction d'un champ magnétique déterminé par la magnétisation dudit film, selon une disposition appelée "barber pole".

8. Capteur selon l'une quelconque des revendications précédentes, **caractérisé en ce qu'**au moins un entre ledit premier élément sensitif (3) et ledit second élément sensitif (4) est du type multicouche, comprenant une superposition de couches ferromagnétiques alternées avec des couches non-ferromagnétiques.

9. Capteur selon l'une des revendications précédentes, **caractérisé en ce que** ledit corps source (2) est un aimant permanent.

10. Capteur selon la revendication 9, **caractérisé en ce que** ledit corps source (2) est un aimant permanent au néodyme.

11. Capteur selon la revendication 9, **caractérisé en ce que** ledit corps source (2) est en forme de cube.

12. Capteur selon l'une quelconque des revendications précédentes, **caractérisé en ce que** ledit premier élément sensitif (3) et ledit second élément sensitif (4) sont disposés symétriquement par rapport à un axe de symétrie, équidistants par rapport audit corps source (2), ledit axe de symétrie étant parallèle à l'axe dudit champ magnétique généré.

13. Capteur selon l'une quelconque des revendications précédentes, **caractérisé en ce que** lesdits moyens pour traiter ledit premier signal et ledit second signal acquis par lesdits moyens d'acquisition sont configurés pour traiter ledit premier signal et ledit second signal, pour mesurer la vitesse de déplacement et/ou l'accélération et/ou les dimensions et le nombre desdits corps qui traversent ou se trouvent dans le champ de mesure dans ledit plan de détection (A).

14. Procédé pour détecter la position instantanée du barycentre de la section d'un corps ferromagnétique (5) à détecter sur un plan de détection (A), comprenant les étapes de :
a. fournir un capteur de proximité magnétorésistif (1) comprenant un corps source (2) pourvu sur ledit plan de détection (A) et adapté pour générer un champ magnétique (B), un premier élément sensitif magnétorésistif (3) et au moins un second élément sensitif magnétorésistif (4), disposés à une distance prédéterminée (a) dans ledit champ magnétique (B) généré, des moyens pour acquérir ledit premier signal et ledit second signal et des moyens pour traiter ledit premier signal et ledit second signal acquis par lesdits moyens d'acquisition ;
b. fournir ou alimenter ledit corps ferromagnétique (5) à travers ledit plan de détection (A) ;
c. acquérir un premier signal émis par ledit premier élément sensitif (3) et un second signal émis par ledit second élément sensitif (4) à travers lesdits moyens d'acquisition ;
d. traiter ledit premier signal acquis et ledit second signal à travers lesdits moyens de traitement, obtenant ainsi une mesure bidimensionnelle, définie par une première coordonnée dans une première dimension et par une seconde coordonnée dans une seconde dimension, indiquant la position instantanée du barycentre dudit corps ferromagnétique (5) dans ledit plan de détection (A).
